# EUROPEAN PATENT SPECIFICATION

(11) **EP 0 520 234 B1**
(45) Date of publication and mention of the grant of the patent: **10.01.1996**
(21) Application number: 92109693.9
(22) Date of filing: 09.06.1992
(51) Int. Cl.: F16L 58/18, F16L 55/11

(54) **Tank and tank connector construction therefore**
Behälter und Behälterverbindungsanordnung dafür
Réservoir et installation de raccordement de réservoir pour celui-ci

(30) Priority: 07.06.1991 US 712301
(43) Date of publication of application: 30.12.1992
(73) Proprietor: STATE INDUSTRIES, INC., Ashland City, TN 37015-1296 (US)
(72) Inventor: Vago, Otto Z., Burns, Tennessee 37029 (US); Faber, Rolf E., Clarksville, Tennessee 37043 (US)
(74) Representative: Grünecker, Kinkeldey, Stockmair & Schwanhäusser Anwaltssozietät

(56) References cited:
- EP-A- 0 389 841
- AU-B- 41 127
- DE-B- 1 294 758
- US-A- 2 829 671

## Description

The invention relates to a tank and tank connector construction therefore comprising: an outer shell of metal material; an inner shell of non-corrosive and non-metallic material mounted inside said outer shell; a metal connector fitting means having an internal threaded body portion, an internal groove and a weld projection portion on the inner end thereof, said weld projection portion of said fitting being welded to said outer shell; a sleeve member means of non-corrosive and non-metallic material, said sleeve member means having a flanged portion and a cylindrical body portion, said flanged portion positioned in said internal groove of said metal connector fitting means, said cylindrical body portion of said sleeve member means fused to said inner shell.

A tank and tank connector construction of this type is known from EP-A-0 389 841 comprising an extension portion of the internal threaded body portion of said metal connector fitting means. Said extension portion is formed during a plastic lining procedure of the tank for forming said inner shell. The extension portion is formed by forming the inner shell and, hence, is a part of the inner shell. For attaining a reliable seal between the inside and the outside of the tank, the threaded extension portion of the inner shell has to be formed with a great accuracy, whereby especially the threaded portion has to be precisely formed. In case the threaded portion of the inner shell is not precisely formed, the seal between a suitable connector member threaded in said threaded portion for preventing the contents of the tank from coming in contact with the inner surface of the metal outer shell and the inner surfaces of the metal fitting is not sufficient.

It is the object of the present invention to provide a reliable seal for the above-mentioned type of a tank and tank connector construction which is easier to manufacture.

This object is attained in that said sleeve member means comprises an internal threaded portion which forms a continuation of the internal threaded body portion of said metal connector fitting means, said internal threaded portion of said sleeve member means is formed in the material of the sleeve member means itself.

This provides the threads being formed as an integral portion of the sleeve material itself. These threads can be produced in a simplified method, for example, the connection of a threaded nipple into the connector to cut the threads into the material of the sleeve itself. The resulting seal between the connector and the sleeve member is much better and more reliable than the known seal between a connector and the threaded portion formed as part of the inner shell. The practice showed that the tank and tank connector construction according to the invention can be manufactured with less rejects than the prior art constructions and simultaneously provides a more reliable seal.

Advantageous features and embodiments of the invention are cited in the dependent claims.
Fig. 1 is a sectional view of a tank connector construction before the inner shell of non-corrosive and non-metallic material is formed in the outer shell;
Fig. 2 is a sectional view like that shown in Fig. 1 but with the inner shell formed in the outer shell;
Fig. 3 is a sectional view like that shown in Fig. 2 after the teflon plug is removed; and
Fig. 4 is a view of an embodiment according to the invention derived from that shown in Fig. 3 after a threaded portion is provided in the sleeve member.

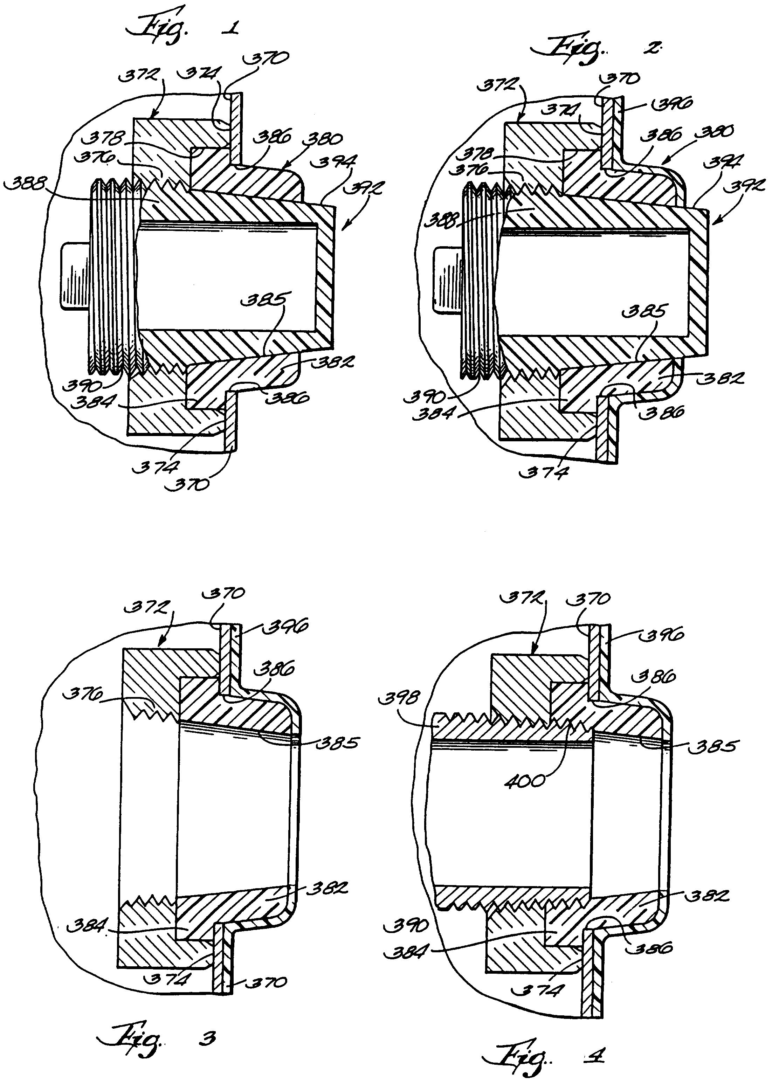

Referring to the embodiment shown in Figs. 1-4, Fig. 1 shows a tank connection comprised of an outer tank shell 370 of metal and a metal connector fitting 372 welded to shell 370 at weld areas 374. Fitting 372 has an internal threaded body portion 376 and an internal groove 378. A sleeve 380 having a cylindrical body portion 382 and a radially extending flange portion 384 is mounted in groove 378 of fitting 372. Body portion 382 and flange 384 have a continuous smooth tapered internal surface 385. Sleeve 380 is made of a polymer material. The body portion 382 of sleeve 380 extends through an opening 386 in shell 370.

A plug member 388 is threaded into fitting 372 and extends through sleeve 380 as shown in Fig. 1. Plug member 388 is preferably made of a material having a low thermal conductivity such as Teflon. Plug member 388 is comprised of an externally threaded body portion 390 and an end portion 392 having a smooth external tapered surface 394. With the plug 388 installed as shown in Fig. 1, the threaded portion 390 extends only to the groove 378 in fitting 372 and the tapered surface 394 on the plug fits snugly in the tapered internal surface 385 of sleeve 380.

Fig. 2 shows the assembly of Fig. 1 after an inner shell 396 has been formed in the metal outer shell 370. As previously described, inner shell 396 is preferably made of a polymer material and is formed by a rotational casting procedure. The inner shell 396 will become fused to the exposed surface of sleeve 380.

Fig. 3 shows the assembly of Fig. 2 after plug 388 has been removed.

Fig. 4 shows the assembly of Fig. 3 with an internal threaded portion according to the invention. A threaded pipe nipple 398 is installed in fitting 372. In a water heater tank, the threaded nipple 398 may be a part of a temperature and pressure relief valve or a part of a drain valve. It will be appreciated that as a threaded pipe nipple 398 is threaded into fitting 372, the lead threads 400 thereon will cut into the polymer material of tapered surface 385 of sleeve 380 to thereby cut a length of threads into surface 385 as shown in Fig. 4.

It will be appreciated that with a final connector assembly like that shown in Fig. 4, the contents of the tank (such as water in a water heater tank) will be effectively sealed from contact with the metal outer tank shell 370 and the metal connector fitting 372 to thus prevent corrosion of the outer shell 370 and fitting 372.

## Claims

1. A tank and tank connector construction therefore comprising:
an outer shell (370) of metal material;
an inner shell (396) of non-corrosive and non-metallic material mounted inside said outer shell (370);
a metal connector fitting means (372) having an internal threaded body portion (376), an internal groove (378) and a weld projection portion (374) on the inner end thereof, said weld projection portion (374) of said fitting (372) being welded to said outer shell (370);
a sleeve member means (380) of non-corrosive and non-metallic material, said sleeve member means (380) having a flanged portion (384) and a cylindrical body portion (382), said flanged portion (384) positioned in said internal groove (378) of said metal connector fitting means (372), said cylindrical body portion (382) of said sleeve member means (380) fused to said inner shell (396),
**characterised in that**
said sleeve member means (380) comprises an internal threaded portion which forms a continuation of the internal threaded body portion (376) of said metal connector fitting means (372), said internal threaded portion of said sleeve member means (380) is formed in the material of the sleeve member means (380) itself.

2. A tank and tank connector construction according to claim 1, **characterised in that** said internal threaded portion of said sleeve member means (380) is formed by screwing a pipe nipple (398) into said metal connector fitting means (372) a sufficient distance so as to cause the leading threads of said pipe nipple (398) to cut threads into said sleeve member means (380).

3. A tank and tank connector construction according to claim 1 or 2, **characterised in that** the internal bore of said flanged portion (384) and said cylindrical body portion (382) of said sleeve member means (380) is a surface which tapers inwardly from the flanged portion end of said sleeve member means (380) to said cylindrical body portion end of said sleeve member means (380), and which includes the internal threaded portion and a continuous smooth surface.

4. A tank and tank connector construction according to one of claims 1 to 3, **characterised in that** said cylindrical body portion (382) of said sleeve member means (380) extending through an opening (386) in said outer shell (370) of metal material.

## Patentansprüche

1. Behälter und Behälterverbindungsanordnung dafür, die folgendes aufweisen:
eine äußere Schale (370) aus metallischem Material;
eine in der äußeren Schale (370) angebrachte innere Schale (396) aus nicht korodierendem und nicht metallischem Material;
ein metallisches Anschlußverbindungsmittel (372) mit einem inneren mit Gewinde versehenen Körperabschnitt (376), einer inneren Rinne (378) und einem Schweißvorsprung (374) an dem inneren Ende davon, wobei der Schweißvorsprung (374) des Anschlusses (372) an die äußere Schale (370) geschweißt ist;
ein Buchsenelementmittel (380) aus nicht korrodierendem und nicht metallischem Material, wobei das Buchsenelementmittel (380) ein Flanschteil (384) und ein Zylinderkörperteil (382) hat, und das Flanschteil (384) in der inneren Rinne (378) des metallischen Anschlußverbindungsmittels (372) positioniert ist, und das Zylinderkörperteil (382) des Buchsenelementmittels (380) mit der inneren Schale (396) verschmolzen ist,
**dadurch gekennzeichnet,**
daß das Buchsenelementmittel (380) einen inneren Gewindeabschnitt aufweist, der eine Fortsetzung des inneren mit Gewinde versehenen Körperabschnitt (376) des metallischen Anschlußverbindungsmittels (372) bildet, und der innere mit Gewinde versehene Körperabschnitt des Buchsenelementmittels (380) in das Material des Buchsenelementmittels (380) selbst geformt ist.

2. Behälter und Behälterverbindungsanordnung gemäß Anspruch 1, **dadurch gekennzeichnet,** daß der innere mit Gewinde versehene Körperabschnitt des Buchsenelementmittels (380) durch Einschrauben eines Rohrstutzens (398) bis zu einer ausreichenden Strecke in das metallische Anschlußverbindungsmittel (372) gebildet ist, um durch das führende Gewinde des Rohrstutzens (398) Gewinde in das Buchsenelementmittel (380) zu schneiden.

3. Behälter und Behälterverbindungsanordnung gemäß Anspruch 1 oder 2, **dadurch gekennzeichnet,** daß die innere Bohrung des Flanschteils (384) und des Zylinderkörperteils (382) des Buchsenelementmittels (380) eine sich von dem Flanschteil des Buchsenelementmittels (380) zu dem Zylinderkörperteilende des Buchsenelementmittels (380) nach innen gerichtete verjüngende Oberfläche ist, und welche den inneren mit Gewinde versehenen Körperabschnitt und eine fortgesetzt glatte Oberfläche aufweist.

4. Behälter und Behälterverbindungsanordnung gemäß einem der Ansprüche 1 bis 3,
**dadurch gekennzeichnet,**
daß das Zylinderkörperteil (382) des Buchsenelementmittels (380) sich durch eine Öffnung (386) in der äußeren Schale (370) aus metallischem Material erstreckt.

## Revendications

1. Réservoir et installation de raccordement de réservoir pour ce dernier comprenant :
une enveloppe extérieure (370) en matériau métallique ;
une enveloppe intérieure (396) en matériau non corrosif et non métallique montée à l'intérieur de ladite enveloppe extérieure (370) ;
un moyen d'assemblage de raccordement métallique (372) comportant une partie de corps taraudée (376) , une rainure interne (378) et une partie en saillie à souder (374) à son extrémité intérieure , ladite partie en saillie à souder (374) dudit assemblage (372) étant soudée à ladite enveloppe extérieure (370) ;
un moyen d'élément de manchon (380) en matériau non corrosif et non métallique, ledit moyen d'élément de manchon (380) possédant une partie de bride (384) et une partie de corps cylindrique (382) , ladite partie de bride (384) étant située dans ladite rainure interne (378) dudit moyen d'assemblage de raccordement métallique (372), ladite partie de corps cylindrique (382) dudit moyen d'élément de manchon (380), étant incorporée à fusion à ladite enveloppe interne (396),
caractérisé en ce que
ledit moyen d'élément de manchon (380) comprend une partie interne taraudée qui forme un prolongement de la partie de corps taraudée (376) dudit moyen d'assemblage de raccordement métallique (372), ladite partie interne taraudée dudit moyen d'élément de manchon (380) etant formée dans le matériau du moyen d'élément de manchon (380) lui-même.

2. Réservoir et installation de raccordement de réservoir selon la revendication 1, caractérisé en ce ue ladite partie interne taraudée dudit moyen d'élément de manchon (380) est formée en vissant un raccord fileté (398) dans ledit moyen d'assemblage de raccordement métallique (372) sur une distance suffisante de façon à entrainer les filets de tête dudit raccord fileté (398) à décolleter des filets dans ledit moyen d'élément de manchon (380).

3. Réservoir et installation de raccordement de réservoir selon la revendication 1 ou 2, caractérisé en ce que le trou interne de ladite partie de bride (384) et de ladite partie de corps cylindrique (382) dudit moyen d'élément de manchon (380) comporte une surface qui se réduit progressivement vers l'intérieur de l'extrémité de la partie de bride dudit moyen d'élément de manchon (380) vers ladite extrémité de la partie de corps cylindrique dudit moyen d'élément de manchon (380) et qui comprend la partie interne taraudée et une surface uniforme continue.

4. Réservoir et installation de raccordement de réservoir selon l'une des revendications 1 à 3, caractérisé en ce que ladite partie de corps cylindrique (382) dudit moyen d'élément de manchon (380) s'étend à travers une ouverture (386) située dans ladite enveloppe extérieure (370) en matériau métallique.
